# EUROPÄISCHE PATENTSCHRIFT

(11) **EP 3 908 490 B1**
(45) Veröffentlichungstag und Bekanntmachung des Hinweises auf die Patenterteilung: **07.09.2022**
(21) Anmeldenummer: 19828990.2
(22) Anmeldetag: 10.12.2019
(51) Int. Cl.: B60T 13/66, B60T 17/22, F16D 66/02

(54) **VERFAHREN ZUM ERMITTELN EINES LÜFTSPIELS EINER ELEKTROMECHANISCHEN BREMSE SOWIE BETREFFENDE BREMSE UND STEUERGERÄT**
METHOD FOR DETERMINING A CLEARANCE OF AN ELECTROMECHANICAL BRAKE, AND BRAKE IN QUESTION AND CONTROL UNIT
PROCÉDÉ POUR RÉGLER UN JEU ENTRE LA GARNITURE ET LE DISQUE D'UN FREIN ÉLECTROMÉCANIQUE AINSI QUE FREIN ET APPAREIL DE COMMANDE ASSOCIÉS

(30) Priorität: 07.01.2019 DE 102019100183
(43) Veröffentlichungstag der Anmeldung: 17.11.2021
(73) Patentinhaber: ZF CV Systems Europe BV, 1170 Brussels (BE)
(72) Erfinder: BEIER, Peter, 31515 Wunstorf (DE); REINERS, Arne, 30173 Hannover (DE)
(74) Vertreter: Ohlendorf, Henrike
(86) Internationale Anmeldenummer: PCT/EP2019/084429
(87) Internationale Veröffentlichungsnummer: WO 2020/143974

(56) Entgegenhaltungen:
- EP-A2- 2 927 068
- DE-A1- 19 730 094
- DE-A1-102007 004 604
- GB-A- 2 333 335

## Beschreibung

Die Erfindung betrifft ein Verfahren zum Ermitteln eines Lüftspiels einer elektromechanischen Bremse, insbesondere einer Nutzfahrzeugbremse. Elektromechanische Bremsen mit Antrieben zum Erzeugen eines Bremsmoments sind in der Kraftfahrzeug-, insbesondere in der Nutzkraftfahrzeugindustrie allgemein bekannt. So offenbart beispielsweise die AT 516 801 A2 eine solche Bremse mit einem elektromechanischen Bremsenaktuator. Ziel ist allgemein, eine Bremse mit elektrischer Energie zu betreiben. Dabei besteht eine wesentliche Herausforderung darin, ausreichend geringe Bremsbetätigungszeiten zu realisieren.

Zur Erreichung konstanter und geringer Bremsbetätigungszeiten sowie zur Erzielung einer konstanten Zuspannkraft kommt der Einstellung des sogenannten Lüftspiels eine zentrale Rolle zu. Dabei bezeichnet der Begriff "Lüftspiel" den Abstand zwischen wenigstens einem Bremsbelag und der Bremsscheibe einer Bremse im ungebremsten Zustand. Im Falle einer Bremsung ist von einem sich in Richtung der Bremsscheibe zuspannenden Bremsbelag das Lüftspiel zu überwinden, bevor eine mechanische Reibwirkung zwischen Bremsscheibe und Bremsbelag und somit eine Bremswirkung eintritt.

Unter anderem aufgrund eines fortschreitenden Verschleißes der Bremsbeläge über deren Lebensdauer unterliegt das Lüftspiel unerwünschten Veränderungen. Um diese zu kompensieren, sind aus dem Stand der Technik mechanische Verschleißnachstellungen bekannt, mittels derer das Lüftspiel auf einen konstanten Wert eingestellt wird. Eine solche Einstellung des Lüftspiels auf einen konstanten Wert kann jedoch bei einer elektromechanischen Bremse je nach Funktionsprinzip der Zuspanneinheit unzureichend sein.

Es ist daher ebenfalls bekannt, mittels Verschleißsensoren den Belagverschleiß zu ermitteln und auf Basis dessen das Lüftspiel in Abhängigkeit vom Belagverschleiß geeignet zu variieren. Nachteilig hierbei wirkt sich jedoch aus, dass solche Sensoren die Komplexität einer elektromechanischen Bremse erhöhen, kostenintensiv sind und im Falle eines Ausfalls aufwendig zu ersetzen sind. Eine weitere Möglichkeit der Lüftspielermittlung offenbart die DE 10 2007 004 604 A1. Die DE 10 2007 004 604 A1 offenbart ein Verfahren und ein Steuergerät zum Bestimmen und Einstellen eines Lüftspiels einer elektromechanischen Bremse, wobei das Verfahren einen Zyklus zur Lüftspielerkennung startet. Es folgt ein Anfahren des elektromechanischen Aktuators aus einer gelösten Position, auch Startposition genannt, hin zu einer Kontaktposition, bei dem die Bremsscheibe und die Bremsbeläge miteinander in Kontakt treten. Weiterhin erfolgt ein Ermitteln der Kontaktposition auf Basis der Rotorposition. Anschließend wird das Lüftspiel durch Auswertung der Startposition und der Kontaktposition bestimmt.

Vor diesem Hintergrund lag der Erfindung die Aufgabe zugrunde, ein Verfahren der eingangs bezeichneten Art dahingehend weiterzubilden, dass die im Stand der Technik aufgefundenen Nachteile möglichst weitgehend behoben werden. Insbesondere war ein Verfahren zum Ermitteln eines Lüftspiels anzugeben, welches keine externen Sensoren erfordert und auf einfache und kostengünstige Weise eine Ermittlung eines Lüftspiels ermöglicht. Erfindungsgemäß wird die Aufgabe bei einem Verfahren der eingangs genannten Art durch die Schritte gelöst: Aktivieren eines Lüftspiel-Ermittlungszyklus für eine Bremse, Bewegen eines elektromechanischen Bremsenaktuators mittels eines Antriebsmotors in eine erste Endposition, bei der sich die Bremse in einem nicht-zugespannten Zustand befindet, Bewegen des elektromechanischen Bremsenaktuators mittels des Antriebsmotors in Richtung einer zweiten Endposition, wobei das Bewegen des Bremsenaktuators wenigstens einen Bremsbelag der Bremse in Richtung einer Bremsscheibe zuspannt, kontinuierliches Ermitteln einer Rotorposition und/oder eines Motorstroms des Antriebsmotors während des Bewegens des Bremsenaktuators in Richtung der zweiten Endposition, Ermitteln einer Kontaktposition, bei welcher der Bremsbelag mit der Bremsscheibe in Kontakt tritt, auf Basis der Rotorposition und/oder des Motorstroms, und Bestimmen eines Lüftspiels und/oder eines Belagverschleißgrades auf Basis der ermittelten Kontaktposition. Dem Verfahren liegt die Erkenntnis zugrunde, dass das Lüftspiel sensorlos unter Ausnutzung der Betriebskenngrößen des elektromechanischen Bremsenaktuators, insbesondere des Antriebsmotors des elektromechanischen Bremsenaktuators, ermittelbar ist. Hierzu wird der Bremsenaktuator zunächst mittels des Antriebsmotors in eine erste Endposition gebracht, bei welcher sich die Bremse in einem nicht-zugespannten Zustand befindet. Aus dieser Position heraus wird die Bremse in Richtung einer Zuspannposition zugespannt und dabei kontinuierlich die Position des Rotors des Antriebsmotors und/oder der Motorstrom ermittelt und aufgezeichnet. Auf Basis des Verlaufes der Rotorposition und/oder des Motorstroms wird die Kontaktposition ermittelt, bei welcher der Bremsbelag mit der Bremsscheibe in Kontakt tritt, ohne dass eine Verwendung weiterer Sensoren nötig wird. Aus der Kontaktposition wird sodann ein Lüftspiel und/oder ein Belagverschleißgrad ermittelt.

Die Ermittlung des Lüftspiels erfolgt damit insgesamt auf kostengünstige Weise bei bestmöglicher Nutzung der bereits vorhandenen Komponenten, womit insgesamt eine Komplexitätsreduktion der elektromechanischen Bremse einhergeht.

Die Erfindung wird dadurch weitergebildet, dass die Ermittlung der Kontaktposition auf Basis der Rotorposition die Schritte umfasst: Definieren eines Maximalstroms für den Antriebsmotor, Betreiben des Antriebsmotors mit einem Motorstrom, welcher kleiner oder gleich dem Maximalstrom ist, Ermitteln einer Rotorendposition des Antriebsmotors, für welche sich für den gegebenen Maximalstrom keine weitere Veränderung der Rotorposition des Antriebsmotors des Bremsenaktuators einstellt, und Ermitteln der Kontaktposition aus der Rotorendposition, insbesondere auf Basis erster Korrelationsparameter.

Mit anderen Worten wird zunächst ein Maximalstrom für den Antriebsmotor definiert, der ausreichend groß ist, um die elektromechanische Bremse im Rahmen des Lüftspiel-Ermittlungszyklus zuzuspannen, der jedoch typischerweise deutlich geringer ist als der Maximalstrom, welcher für einen elektromechanischen Bremsvorgang verwendet wird. Der Antriebsmotor wird sodann während des Zuspannens mit einem Motorstrom betrieben, welcher kleiner oder gleich dem Maximalstrom ist. Tritt der Bremsbelag nach dem Überwinden des Lüftspiels mit der Bremsscheibe an der Kontaktposition in Kontakt, so hat dieses zur Folge, dass der Antriebsmotorstrom aufgrund des höheren mechanischen Widerstandes am Antriebsmotor ansteigt und an der Maximalstromgrenze begrenzt wird. Nachdem die Kontaktposition erreicht worden ist, findet aufgrund der Begrenzung des Maximalstroms nur eine geringfügige weitere Rotation des Rotors des Antriebsmotors statt. Der Antrieb erreicht anschließend seine Rotorendposition. Unter Verwendung von Korrelationsparametern lässt sich aus der Rotorendposition die Kontaktposition ermitteln, aus welcher sich wiederum das Lüftspiel und/oder ein Belagverschleißgrad ermitteln lassen.

Die Kontaktposition sowie das Lüftspiel lassen sich somit vorteilhaft ohne Verwendung externer Sensoren aus ohnehin zu ermittelnden Betriebsparametern, wie Stromstärken und Rotorpositionen, ermitteln.

Gemäß einer bevorzugten Weiterbildung weisen die ersten Korrelationsparameter wenigstens einen der folgenden Parameter auf: Stromstärke, zuletzt ermittelter Belagverschleißgrad, Übersetzung eines Getriebes des Bremsenaktuators. Die Kenntnis der Parameter und die Verwendung selbiger zur Berechnung der Kontaktposition und des Lüftspiels hat sich als vorzugswürdig zur Erhöhung der Bestimmungsgenauigkeit erwiesen.

Gemäß einer bevorzugten Weiterbildung umfasst die Ermittlung der Kontaktposition auf Basis des Motorstroms die Schritte: Detektieren einer Veränderung des Motorstroms, insbesondere eine erstmalige Zunahme des Motorstroms, Ermitteln der korrespondierenden Rotorposition, bei welcher sich die Stromzunahme des Motorstroms erstmals einstellt, Ermitteln der Kontaktposition aus der Rotorposition, insbesondere auf Basis zweiter Korrelationsparameter.

Bei der Ermittlung der Kontaktposition auf Basis des Motorstroms erfolgt eine Überwachung des Motorstroms während des Zuspannens der elektromechanischen Bremse. Von besonderer Bedeutung ist dabei jener Zeitpunkt, bei welchem der Motorstrom nach dem Überwinden des Lüftspiels und Inkontakttreten des Bremsbelags mit der Bremsscheibe erstmals ansteigt. Dieser Anstieg des Motorstroms dient als Indikator für das Inkontakttreten des Bremsbelages mit der Bremsscheibe. Für dieses Ereignis wird die korrespondierende Rotorposition des Antriebsmotors ermittelt und sodann aus dieser Rotorposition die Kontaktposition bestimmt. Vorzugsweise werden zur Erhöhung der Bestimmungsgenauigkeit zweite Korrelationsparameter hinzugezogen. Vorzugsweise umfassen die zweiten Korrelationsparameter einen zuletzt ermittelten Belagverschleißgrad und/oder eine Übersetzung eines Getriebes des Bremsenaktuators. Dabei können die zweiten Korrelationsparameter gleich den ersten Korrelationsparametern sein oder von diesen abweichen.

Vorteilhaft ermöglicht auch diese alternative Verfahrensausprägung eine sensorlose Ermittlung eines Lüftspiels ohne das Erfordernis, weitere komplexitätserhöhende Sensorik bereithalten zu müssen.

Gemäß einer bevorzugten Weiterbildung umfasst das Verfahren ferner den Schritt: Hinterlegen wenigstens eines der folgenden in einem Speicher, insbesondere in einem Speicher eines Steuergeräts: ermittelte Kontaktposition, Lüftspiel, Belagverschleißgrad. Die genannten Parameter können nach Ablage in dem Speicher für eine Vielzahl von Anwendungen verfügbar gemacht werden und können darüber hinaus für nachfolgende Lüftspiel-Ermittlungszyklen, beispielsweise zum Zwecke der Erhöhung der Messgenauigkeit herangezogen werden.

In einem weiteren Aspekt betrifft die Erfindung ein Steuergerät zum Ermitteln eines Lüftspiels einer elektromechanischen Bremse, insbesondere einer Nutzfahrzeugbremse, mit einer Schnittstelle zur signalleitenden Verbindung des Steuergeräts mit einem Bremsenaktuator, einem Speicher und einem Prozessor.

Die Erfindung löst die eingangs bezeichnete Aufgabe in Bezug auf das Steuergerät, indem das Steuergerät dazu eingerichtet ist, einen Lüftspiel-Ermittlungszyklus für die Bremse zu aktivieren, einen elektromechanischen Bremsenaktuator mittels eines Antriebsmotors in eine erste Endposition zu bewegen, bei der sich die Bremse in einem nicht-zugespannten Zustand befindet, den elektromechanischen Bremsenaktuator mittels des Antriebsmotors in Richtung einer zweiten Endposition zu bewegen, wobei das Bewegen des Bremsenaktuators wenigstens einen Bremsbelag der Bremse in Richtung einer Bremsscheibe zuspannt, eine Rotorposition und/oder ein Motorstrom des Antriebsmotors während des Bewegens des Bremsenaktuators in Richtung der zweiten Endposition kontinuierlich zu ermitteln, eine Kontaktposition, bei welcher der Bremsbelag mit der Bremsscheibe in Kontakt tritt, auf Basis der Rotorposition und/oder des Motorstroms zu ermitteln, und ein Lüftspiel sowie vorzugsweise einen Belagverschleißgrad auf Basis der ermittelten Kontaktposition zu bestimmen.

Damit ist auch das erfindungsgemäße Steuergerät dazu in der Lage, unter Rückgriff auf Antriebsmotorkennwerte, wie Motorstrom sowie Rotorposition, das Lüftspiel sowie vorzugsweise einen Belagverschleißgrad zu ermitteln. Das Steuergerät benötigt somit keine Sensorsignale von externen Sensoren zur Ermittlung des Lüftspiels.

Das Steuergerät wird erfindungsgemäß dadurch weitergebildet, dass es zur Ermittlung der Kontaktposition auf Basis der Rotorposition dazu eingerichtet ist, einen Maximalstrom für den Antriebsmotor zu definieren, den Antriebsmotor mit einem Motorstrom zu betreiben, welcher kleiner oder gleich dem Maximalstrom ist, eine Rotorendposition des Antriebsmotors zu ermitteln, für welche sich für den gegebenen Maximalstrom keine weitere Veränderung der Rotorposition des Bremsenaktuators einstellt, und eine Kontaktposition aus der Rotorendposition zu ermitteln, insbesondere auf Basis erster Korrelationsparameter. Hinsichtlich der Vorteile sei auf obige Ausführungen zum erfindungsgemäßen Verfahren verwiesen und diese hier mit einbezogen. Zusammengefasst wird der maximale Motorstrom für den Lüftspiel-Ermittlungszyklus limitiert, sodass dieser zwar groß genug ist, die Bremse bis zum Überwinden des Lüftspiels zuzuspannen, anschließend jedoch die Bremse allenfalls noch geringfügig weiter zuspannt. Tritt der Bremsbelag mit der Bremsscheibe in Kontakt, so verändert sich die Position des Rotors des Antriebsmotors aufgrund der Strombegrenzung nicht weiter oder nur noch geringfügig, wobei sodann aus der Rotorendposition ein Rückschluss auf die Kontaktposition und schließlich das Lüftspiel gezogen werden kann.

Gemäß einer bevorzugten Ausführungsform ist das Steuergerät zur Ermittlung der Kontaktposition auf Basis des Motorstroms dazu eingerichtet, eine Veränderung des Motorstroms zu detektieren, insbesondere eine erstmalige Zunahme des Motorstroms, eine korrespondierende Rotorposition zu ermitteln, bei welcher sich die Stromzunahme des Motorstroms erstmalig einstellt, und eine Kontaktposition aus der Rotorposition zu ermitteln, insbesondere auf Basis zweiter Korrelationsparameter.

Hierbei macht sich das Steuergerät die Erkenntnis zunutze, dass ein Anstieg des Motorstroms während des Zuspannens der elektromechanischen Bremse einen Indikator dafür bereitstellt, dass der Antriebsmotor ein größeres Drehmoment zu überwinden hat, welches wiederum damit korreliert, dass der Bremsbelag mit der Bremsscheibe in Kontakt tritt und sich die erforderliche Zuspannkraft nach dem Überwinden des Lüftspiels erhöht. Erneut sei auf obige Ausführungen zum erfindungsgemäßen Verfahren verwiesen und deren Inhalt hier mit einbezogen.

In einem weiteren Aspekt betrifft die Erfindung eine elektromechanische Bremse, insbesondere für Nutzfahrzeuge, mit einer Bremsscheibe, wenigstens einem in einem Bremssattel aufgenommenen Bremsbelag, einem elektromechanischen Bremsenaktuator mit einem elektromechanischen Antriebsmotor zum Zuspannen des wenigstens einen Bremsbelags in Richtung der Bremsscheibe, und einem Steuergerät.

Die Erfindung löst die eingangs bezeichnete Aufgabe in Bezug auf die elektromechanische Bremse, indem das Steuergerät nach einem der vorstehenden Ausführungsbeispiele ausgebildet ist.

Die Erfindung löst die eingangs bezeichnete Aufgabe ferner in Bezug auf ein Computerprogrammprodukt, welches Befehle umfasst, die ausgeführt auf einem Steuergerät nach einem der oben genannten Ausführungsbeispiele das Verfahren nach einem der dem Verfahren zugehörigen Ausführungsbeispiele ausführen.

Die elektromechanische Bremse und das Computerprogrammprodukt machen sich die gleichen Vorteile und bevorzugten Ausführungsformen zunutze wie das erfindungsgemäße Verfahren und das erfindungsgemäße Steuergerät. Diesbezüglich wird auf die obigen Ausführungen verwiesen und deren Inhalt hier mit einbezogen.

Ausführungsbeispiele der Erfindung werden nun nachfolgend anhand der Zeichnungen beschrieben. Diese sollen die Ausführungsbeispiele nicht notwendigerweise maßstäblich darstellen, vielmehr sind Zeichnungen, wo zur Erläuterung dienlich, in schematischer und/oder leicht verzerrter Form ausgeführt. Im Hinblick auf Ergänzungen der aus den Zeichnungen unmittelbar erkennbaren Lehren wird auf den einschlägigen Stand der Technik verwiesen.

Der Einfachheit halber sind nachfolgend identische Teile oder Teile mit identischer oder ähnlicher Funktion mit gleichen Bezugszeichen versehen. Weitere Vorteile, Merkmale und Einzelheiten der Erfindung ergeben sich aus der nachfolgenden Beschreibung, den bevorzugten Ausführungsformen sowie anhand der folgenden Figuren.

Im Einzelnen zeigen:
Fig. 1 ein erstes Ausführungsbeispiel einer erfindungsgemäßen elektromechanischen Bremse mit einem Steuergerät zum Ermitteln des Lüftspiels in einer perspektivischen Ansicht;
Fig. 2 ein Blockschaltbild eines erfindungsgemäßen Verfahrens zum Ermitteln eines Lüftspiels einer elektromechanischen Bremse;
Fig. 3 ein Blockschaltbild, welches die erfindungsgemäßen Verfahrensschritte zum Ermitteln der Kontaktposition detailliert; und
Fig. 4 u. 5 Diagramme zur Veranschaulichung der erfindungsgemäßen Verfahren zur Ermittlung der Kontaktposition auf Basis des Rotorstroms und der Rotorposition.

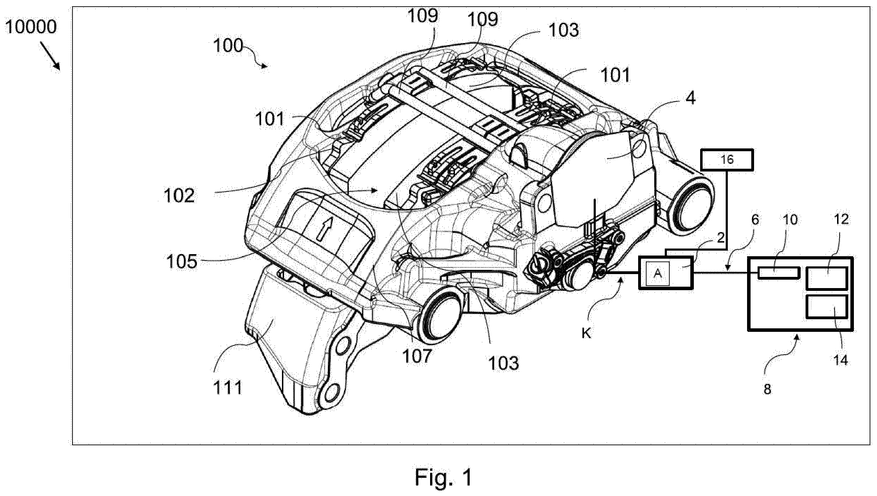

Fig. 1 zeigt ein Fahrzeugsystem 10000 mit einer elektromechanischen Bremse 100. Die elektromechanischen Bremse 100 weist einen Bremsenträger 111 sowie einen Bremssattel 107 auf. Auf dem Bremsenträger 111 sind Bremsbeläge 103 geführt und aufgenommen. Mittels eines elektromechanischen Bremsenaktuators 2 sind die Bremsbeläge 103 in Richtung eines Aufnahmeraums 105 für eine Bremsscheibe (nicht gezeigt) bewegbar und mit einer solchen verspannbar. Die Bremsbeläge 103 werden durch Niederhaltebügel 109 sowie Niederhaltefedern 101 in Position gehalten. Nach Entfernen des Niederhaltebügels 109 und der Niederhaltefedern 101 sind die Bremsbeläge 103 von dem Bremsenträger 111 entnehmbar und können ausgetauscht werden. Der Bremsenträger 111 weist ferner einer Belagrückenplatte 102 zur lateralen Führung der Bremsbeläge 103 auf.

Befindet sich die elektromechanische Bremse 100 in einem nicht betätigten Zustand, das heißt, wird von dem Bremsenaktuator 2 keine Zuspannkraft auf die Bremsbeläge 103 aufgebracht, so besteht zwischen Bremsbelag 103 und Bremsscheibe ein Lüftspiel L. Jene Position, bei welcher wenigstens ein Bremsbelag 103 nach Überwinden des Lüftspiels L erstmalig mit der Bremsscheibe in Kontakt tritt, wird als Kontaktposition K bezeichnet. Das Zuspannen der Bremse 100 erfolgt durch Aufbringen einer Betätigungskraft durch den Bremsenaktuator 2 auf eine Schnittstelle für einen Zuspannmechanismus 4, welcher wiederum ein Zuspannen der Bremsbeläge 103 in Richtung der Bremsscheibe bewirkt.

Der Bremsenaktuator 2 verfügt zum Erzeugen einer Antriebskraft bzw. eines Antriebsmomentes über einen Antriebsmotor A. Der Bremsenaktuator 2 empfängt ein Aktuatorsignal 16 zur Betätigung des Bremsenaktuators 2. Der Bremsenaktuator 2 ist ferner bidirektional über eine signalleitende Verbindung 6 mit einer Schnittstelle 10 eines Steuergerätes 8 verbunden. Das Steuergerät 8 ist dazu eingerichtet, vermittels des Bremsenaktuators 2 und dessen Antrieb A ohne Rückgriff auf weitere externe Sensoren, eine Kontaktposition K zu ermitteln, bei welcher die Bremsbeläge 103 mit der Bremsscheibe 105 erstmalig in Kontakt treten. Das Steuergerät 8 weist ferner einen Speicher 12 sowie einen Prozessor 14 auf. Die signalleitende Verbindung 6 kann sowohl als drahtgebundene Verbindung als auch als drahtlose Verbindung ausgebildet sein. Insbesondere ist die signalleitende Verbindung 6 dazu eingerichtet, einen Motorstrom i sowie eine Position des Rotors ϕ des Antriebsmotors A an die Schnittstelle 10 und damit an das Steuergerät 8 zu übertragen.

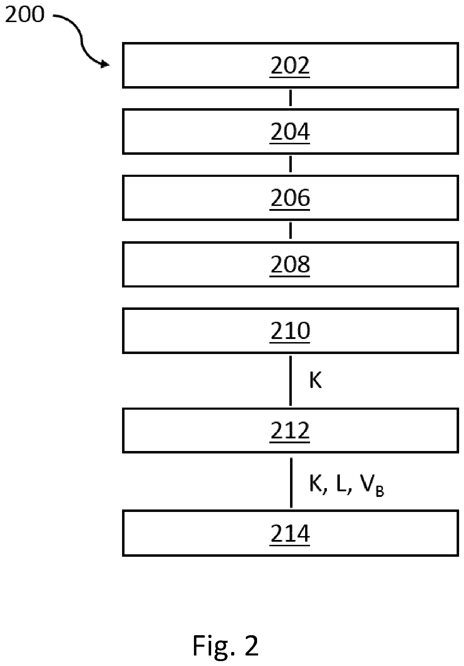

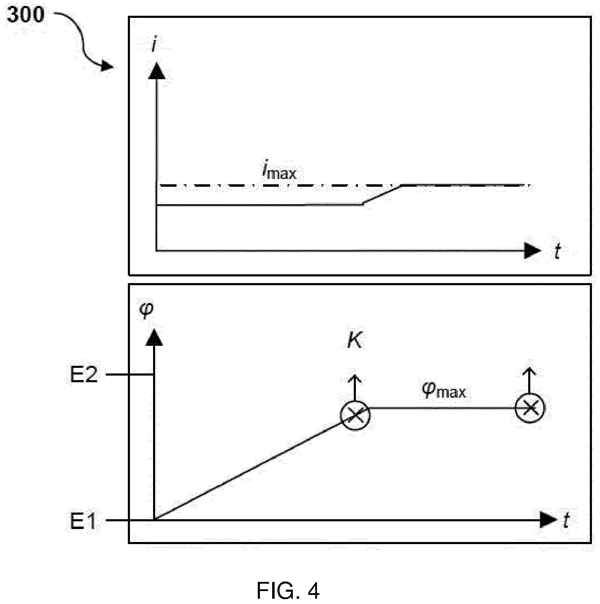

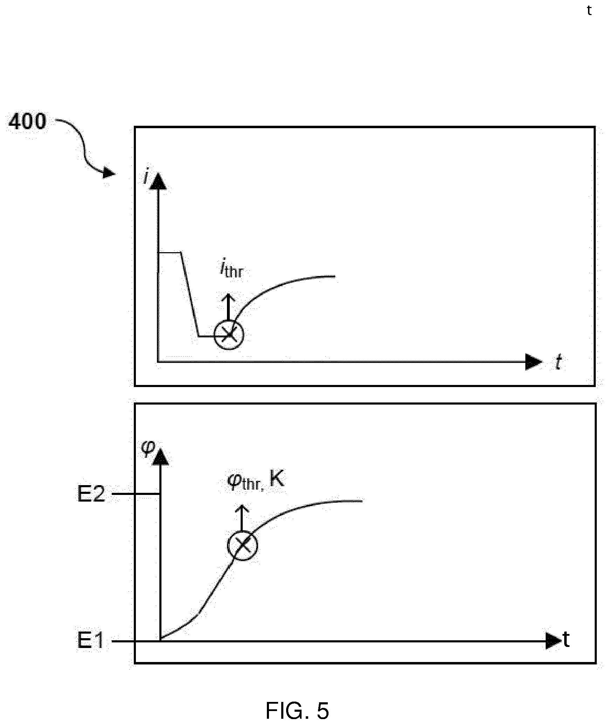

Ein Verfahren 200 zum Ermitteln eines Lüftspiels einer elektromechanischen Bremse 100 ist in Fig. 2 anhand eines Blockschaltbildes veranschaulicht. Das Verfahren wird im Schritt 202 durch Aktivieren eines Lüftspiel-Ermittlungszyklus initiiert. Anschließend wird im Schritt 204 der elektromechanische Bremsenaktuator 2 in eine erste Endposition E1 bewegt (vgl. auch Fig. 4 und 5), die einer geöffneten, das heißt einer nicht gebremsten elektromechanischen Bremse 100 entspricht. Aus dieser ersten Endposition E1 erfolgt im Schritt 206 ein Bewegen des elektromechanischen Bremsenaktuators 2 mittels des Antriebes A in Richtung einer zweiten Endposition E2 (vgl. ebenfalls auch Fig. 4 und 5). Die Bremse 100 wird dabei zugespannt.

Während der Bewegung gemäß Schritt 206 erfolgt im Schritt 208 ein kontinuierliches Ermitteln einer Rotorposition ϕ und/oder eines Motorstroms i des Antriebsmotors A. Auf Basis der Rotorposition ϕ und/oder des Motorstroms i erfolgt im Schritt 210 ein Ermitteln einer Kontaktposition K, bei welcher der oder die Bremsbeläge 103 mit einer Bremsscheibe in Kontakt treten. Auf Basis der Kontaktposition K erfolgt schließlich im Schritt 212 das Bestimmen eines Lüftspiels L und eines Belagverschleißgrades V_{B}, wobei die ermittelten Parameter Kontaktposition K, Lüftspiel L sowie Belagverschleißgrad V_{B} im Schritt 214 im Speicher 12 gespeichert werden.

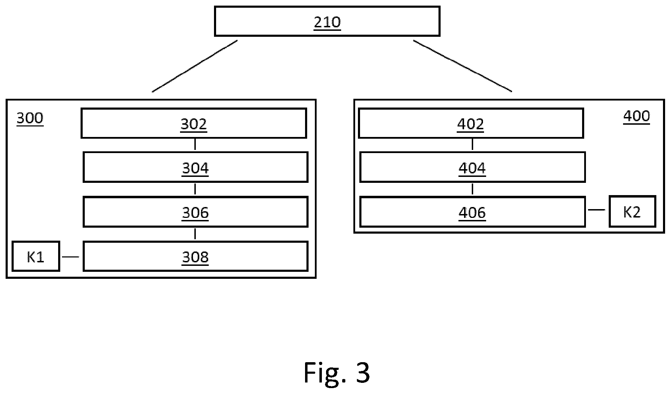

Der Schritt des Ermittelns einer Kontaktposition K gemäß Schritt 210 ist in Fig. 3 anhand des dort dargestellten Blockschaltbildes weiter detailliert. Zur Ermittlung der Kontaktposition K stehen zwei Optionen zur Verfügung: Die Kontaktposition K kann zum einen auf Basis einer Rotorposition ϕ des Antriebes A gemäß dem Zweig 300 ermittelt werden und/oder auf Basis des Rotorstroms i des Antriebs A gemäß dem Zweig 400.

Zur Ermittlung der Kontaktposition K auf Basis der Rotorposition ϕ gemäß Zweig 300 erfolgt zunächst gemäß Schritt 302 die Definition eines maximalen Motorstroms iₘₐₓ für den Antriebsmotor A. Der maximale Motorstrom iₘₐₓ wird so ausgewählt, dass dieser zwar ein Überwinden des Lüftspiels L durch den Bremsenaktuator 2 ermöglicht, ist jedoch so gering, dass nach dem Inkontakttreten der Bremsbeläge 103 mit einer Bremsscheibe kein signifikantes weiteres Zuspannen der elektromechanischen Bremse 100 möglich ist. Gemäß Schritt 304 wird sodann der Antriebsmotor A mit einem Motorstrom i betrieben, der kleiner oder gleich dem maximalen Motorstrom iₘₐₓ ist.

Nach dem Überwinden des Lüftspiels L tritt der Bremsbelag 103 an der Kontaktposition K in Kontakt mit einer Bremsscheibe, womit sich das aufzubringende Antriebsdrehmoment des Antriebs A erhöht und folglich auch der Motorstrom i. Aufgrund der Begrenzung des maximalen Motorstroms auf iₘₐₓ, erfolgt nach dem Inkontakttreten des Bremsbelags 103 mit einer Bremsscheibe kein signifikantes weiteres Verspannen der elektromechanischen Bremse 100. Die Rotorendposition ϕₘₐₓ des Antriebes A kann zur Ermittlung der Kontaktrotorposition im Schritt 308 herangezogen werden. Zur Ermittlung der Kontaktposition K im Schritt 308 werden ferner erste Korrelationsparameter K1 herangezogen.

Auf alternative Weise kann die Kontaktposition K auf Basis des Rotorstroms i gemäß Zweig 400 ermittelt werden. In diesem Fall erfolgt während der Betätigung des Aktuators 2 aus der ersten Endposition E1 in Richtung der zweiten Endposition E2 eine kontinuierliche Überwachung des Motorstroms i. Tritt ein Bremsbelag 103 nach Überwinden des Lüftspiels L in Kontakt mit einer Bremsscheibe, so steigt das vom Antrieb A aufzubringende Drehmoment und damit der Motorstrom i an. Im Schritt 402 wird der erstmalige Anstieg des Motorstroms i als Grenzstrom iₜₕᵣ erfasst und die korrespondierende Grenzrotorposition ϕₜₕᵣ im Schritt 404 erfasst. Unter Zuhilfenahme von zweiten Korrelationsparametern K2 erfolgt im Schritt 406 eine Ermittlung der Kontaktposition K.

Die Verläufe von Motorstrom i sowie Rotorposition ϕ während der Ermittlung der Kontaktposition K auf Basis der Rotorposition ϕ gemäß Zweig 300 sind in Fig. 4 veranschaulicht. Im oberen Bereich des Diagrammes ist die Stromstärke i über der Zeit t aufgetragen, wobei im unteren Bereich des Diagrammes die Rotorposition ϕ über der Zeit t aufgetragen ist. Die Rotorposition ϕ korrespondiert dabei näherungsweise mit einer Bewegung des Bremsenaktuators 2 von der ersten Endposition E1 in Richtung der zweiten Endposition E2. Während der Bremsenaktuator 2 das Lüftspiel L überwindet, steigt die Kurve der Rotorposition ϕ linear an und der Motorstrom i bleibt konstant und unterhalb des definierten maximalen Motorstroms iₘₐₓ.

Nach Überwindung des Lüftspiels L tritt der Bremsbelag 103 in Kontakt mit einer Bremsscheibe, wodurch sich das erforderliche Drehmoment des Antriebs A erhöht, welches mit einem Anstieg des Stromes i korrespondiert. Der Strom i steigt solange an, bis der maximale Motorstrom iₘₐₓ erreicht wird. Für den Zustand, bei dem der Motorstrom i dem maximalen Motorstrom iₘₐₓ entspricht, stellt sich eine konstante Rotorendposition ϕₘₐₓ ein. Wie in Fig. 4 dargestellt, korrespondiert die Kontaktposition K nicht notwendigerweise unmittelbar mit der Rotorendposition ϕₘₐₓ, da je nach Definition des maximalen Motorstroms iₘₐₓ ein geringfügiges weiteres Zuspannen der elektromechanischen Bremse 100 erfolgt. Unter anderem aus diesem Grund werden erste Korrelationsparameter K1 zur Ermittlung der Kontaktposition K aus der Rotorendposition ϕₘₐₓ herangezogen.

Fig. 5 visualisiert die Ermittlung der Kontaktposition K auf Basis des Rotorstroms i gemäß Zweig 400. Erneut sind jeweils die Stromstärke i sowie die Rotorposition ϕ über der Zeit aufgetragen. Beim Zuspannen der elektromechanischen Bremse 100 ist zunächst ein Strom i zur Beschleunigung des Aktuators 2 erforderlich, der nach der Beschleunigung des Aktuators 2 abnimmt und sich auf ein Grundniveau während der Überwindung des Lüftspiels L reduziert. Nachdem der Bremsbelag 103 mit einer Bremsscheibe in Kontakt tritt, erhöht sich das erforderliche Drehmoment des Antriebs A, womit ein Anstieg des Stroms i einhergeht. Der Grenzstrom iₜₕᵣ, bei welchem ausgehend von dem Grundniveau erstmalig ein Anstieg des Stromes i stattfindet, dient als Indikator für die Ermittlung der Kontaktposition K, indem die korrespondierende Grenzrotorposition ϕₜₕᵣ ermittelt wird, und aus dieser, gegebenenfalls mithilfe von zweiten Korrelationsparametern K2, eine Kontaktposition K ermittelt wird.

### Bezugszeichenliste (Teil der Beschreibung)

- 2: Bremsenaktuator
- 4: Schnittstelle für Zuspannmechanismus
- 6: signalleitende Verbindung
- 8: Steuergerät
- 10: Schnittstelle
- 12: Speicher
- 14: Prozessor
- 16: Aktuatorsignal (Eingangssignal)
- 100: elektromechanische Bremse
- 101: Niederhaltefedern
- 102: Belagrückenplatte
- 103: Bremsbeläge
- 105: Aufnahmeraum für Bremsscheibe
- 107: Bremssattel
- 109: Niederhaltebügel
- 111: Bremsenträger
- 200: Verfahren zum Ermitteln eines Lüftspiels einer Bremse
- 202: Aktivieren eines Lüftspiel-Ermittlungszyklus
- 204: Bewegen eines elektromechanischen Bremsenaktuators in erste Endposition
- 206: Bewegen des elektromechanischen Bremsenaktuators in Richtung einer zweiten Endposition
- 208: Kontinuierliches Ermitteln einer Rotorposition und/oder eines Motorstroms des Antriebsmotors
- 210: Ermitteln einer Kontaktposition
- 212: Bestimmen eines Lüftspiels und Belagverschleißgrades
- 214: Speichern der Parameter
- 300: Ermitteln der Kontaktposition auf Basis der Rotorposition
- 302: Definieren eines maximalen Motorstroms für den Antriebsmotor
- 304: Betreiben des Antriebsmotors
- 306: Ermitteln der Kontaktrotorposition
- 308: Ermitteln der Kontaktposition
- 400: Ermitteln der Kontaktposition auf Basis des Rotorstroms
- 402: Detektieren einer Veränderung des Motorstroms
- 404: Ermitteln der korrespondieren Rotorposition
- 406: Ermitteln der Kontaktposition
- 10000: Fahrzeugsystem
- A: Antriebsmotor
- E1: erste Endposition
- E2: zweite Endposition
- K: Kontaktposition
- K1: Erste Korrelationsparameter
- K2: Zweite Korrelationsparameter
- L: Lüftspiel
- V_{B}: Belagverschleißgrad
- ϕ: Rotorposition
- ϕₘₐₓ: Rotorendposition
- ϕₜₕᵣ: Grenzrotorposition
- i: Motorstrom
- iₘₐₓ: Maximaler Motorstrom
- iₜₕᵣ: Grenzstrom

## Patentansprüche

1. Verfahren (200) zum Ermitteln eines Lüftspiels (L) einer elektromechanischen Bremse (100), insbesondere einer Nutzfahrzeugbremse, umfassend die Schritte:
- Aktivieren (202) eines Lüftspiel-Ermittlungszyklus für die Bremse (100),
- Bewegen (204) eines elektromechanischen Bremsenaktuators (2) mittels eines Antriebsmotors (A) in eine erste Endposition (E1), bei der sich die Bremse (100) in einem nicht-zugespannten Zustand befindet,
- Bewegen (206) des elektromechanischen Bremsenaktuators (2) mittels des Antriebsmotors (A) in Richtung einer zweiten Endposition (E2), wobei das Bewegen des Bremsenaktuators (2) wenigstens einen Bremsbelag (103) der Bremse (100) in Richtung einer Bremsscheibe zuspannt, wobei das Verfahren durch folgende Schritte gekennzeichnet ist:
- kontinuierliches Ermitteln (208) einer Rotorposition (ϕ) und/oder eines Motorstroms (i) des Antriebsmotors (A) während des Bewegens des Bremsenaktuators (2) in Richtung der zweiten Endposition (E2),
- Ermitteln (210) einer Kontaktposition (K), bei welcher der Bremsbelag (103) mit der Bremsscheibe in Kontakt tritt, auf Basis der Rotorposition (ϕ) und/oder des Motorstroms (i),
- Bestimmen (212) eines Lüftspiels (L) und/oder eines Belagverschleißgrades (V_{B}) auf Basis der ermittelten Kontaktposition (K).

2. Verfahren (200) nach Anspruch 1,
wobei die Ermittlung (300) der Kontaktposition (K) auf Basis der Rotorposition (ϕ) die Schritte umfasst:
- Definieren (302) eines Maximalstroms (iₘₐₓ) für den Antriebsmotor (A),
- Betreiben (304) des Antriebsmotors (A) mit einem Motorstrom (i), welcher kleiner oder gleich dem Maximalstrom (iₘₐₓ) ist,
- Ermitteln (306) einer Rotorendposition (ϕₘₐₓ) des Antriebsmotors (A), für welche sich für den gegebenen Maximalstrom (iₘₐₓ) keine weitere Veränderung der Rotorposition (ϕ) des Antriebsmotors (A) des Bremsenaktuators (2) einstellt,
- Ermitteln der Kontaktposition (K) aus der Rotorendposition (ϕₘₐₓ), insbesondere auf Basis erster Korrelationsparameter (K1).

3. Verfahren (200) nach Anspruch 2,
wobei die ersten Korrelationsparameter (K1) wenigstens einen der folgenden Parameter aufweisen:
- Stromstärke,
- zuletzt ermittelter Belagverschleißgrad,
- Übersetzung eines Getriebes des Bremsenaktuators.

4. Verfahren (200) nach einem der vorstehenden Ansprüche,
wobei die Ermittlung (400) der Kontaktposition (K) auf Basis des Motorstroms (i) die Schritte umfasst:
- Detektieren (402) einer Veränderung des Motorstroms (i), insbesondere eine erstmalige Zunahme des Motorstroms (iₜₕᵣ),
- Ermitteln (404) der korrespondieren Rotorposition (ϕₜₕᵣ), bei welcher sich die Stromzunahme des Motorstroms (iₜₕᵣ) erstmals einstellt,
- Ermitteln (406) der Kontaktposition (K) aus der Rotorposition ϕₜₕᵣ), insbesondere auf Basis zweiter Korrelationsparameter (K2).

5. Verfahren (200) nach einem der vorstehenden Ansprüche, ferner
umfassend den Schritt:
- Hinterlegen wenigstens eines der folgenden in einem Speicher (12), insbesondere in einem Speicher (12) eines Steuergeräts (8):
Ermittelte Kontaktposition (K),
Lüftspiels (L),
Belagverschleißgrad (V_{B}).

6. Steuergerät (8) zum Ermitteln eines Lüftspiels (L) einer elektromechanischen Bremse (100), insbesondere einer Nutzfahrzeugbremse, mit
- einer Schnittstelle (10) zur signalleitenden Verbindung (6) des Steuergeräts (8) mit einem Bremsenaktuator (2);
- einem Speicher (12) und einem Prozessor (14),
wobei das Steuergerät (8) dazu eingerichtet ist:
- einen Lüftspiel-Ermittlungszyklus (202) für die Bremse (100) zu aktivieren,
- einen elektromechanischen Bremsenaktuator (2) mittels eines Antriebsmotors (A) in eine erste Endposition (E1) zu bewegen, bei der sich die Bremse (100) in einem nicht-zugespannten Zustand befindet,
- den elektromechanischen Bremsenaktuator (2) mittels des Antriebsmotors (A) in Richtung einer zweiten Endposition (E2) zu bewegen, wobei das Bewegen des Bremsenaktuators (2) wenigstens einen Bremsbelag (103) der Bremse (100) in Richtung einer Bremsscheibe zuspannt, **dadurch gekennzeichnet, dass** das Steuergerät weiterhin dazu eingerichtet ist
- eine Rotorposition (ϕ) und/oder einen Motorstrom (i) des Antriebsmotors (A) während des Bewegens des Bremsenaktuators (2) in Richtung der zweiten Endposition (E2) kontinuierlich zu ermitteln,
- eine Kontaktposition (K), bei welcher der Bremsbelag (103) mit der Bremsscheibe in Kontakt tritt, auf Basis der Rotorposition (ϕ) und/oder des Motorstroms (i) zu ermitteln, und
- ein Lüftspiel (L) sowie vorzugsweise einen Belagverschleißgrad (V_{B}) auf Basis der ermittelten Kontaktposition (K) zu bestimmen.

7. Steuergerät (8) nach Anspruch 6,
wobei das Steuergerät (8) zur Ermittlung (300) der Kontaktposition (K) auf Basis der Rotorposition (ϕ) dazu eingerichtet ist,
- einen Maximalstrom (iₘₐₓ) für den Antriebsmotor (A) zu definieren (302),
- den Antriebsmotor (A) mit einem Motorstrom (i) zu betreiben (304), welcher kleiner oder gleich dem Maximalstrom (iₘₐₓ) ist,
- eine Rotorendposition (ϕₘₐₓ) des Antriebsmotors (A) zu ermitteln (306), für welche sich für den gegebenen Maximalstrom (iₘₐₓ) keine weitere Veränderung der Rotorposition (ϕ) des Bremsenaktuators (2) einstellt,
- eine Kontaktposition (K) aus der Rotorendposition (ϕₘₐₓ) zu ermitteln, insbesondere auf Basis erster Korrelationsparameter (K1).

8. Steuergerät (8) nach Anspruch 6,
wobei das Steuergerät (8) zur Ermittlung (400) der Kontaktposition (K) auf Basis des Motorstroms (i) dazu eingerichtet ist,
- eine Veränderung des Motorstroms (i) zu detektieren (402), insbesondere eine erstmalige Zunahme des Motorstroms (iₜₕᵣ),
- eine korrespondiere Rotorposition (ϕₜₕᵣ) zu ermitteln (404), bei welcher sich die Stromzunahme des Motorstroms (iₜₕᵣ) erstmalig einstellt,
- eine Kontaktposition (K) aus der Rotorposition (ϕₜₕᵣ) zu ermitteln (406), insbesondere auf Basis zweiter Korrelationsparameter (K2).

9. Elektromechanische Bremse (100), insbesondere für Nutzfahrzeuge, mit einer Bremsscheibe,
wenigstens einem in einem Bremssattel (107) aufgenommenen Bremsbelag (103), einem elektromechanischen Bremsenaktuator (2) mit einem elektrischen Antriebsmotor (A) zum Zuspannen des wenigstens einen Bremsbelags (103) in Richtung der Bremsscheibe,
und einem Steuergerät (8),
**dadurch gekennzeichnet, dass** das Steuergerät (8) nach einem der Ansprüche 6 bis 8 ausgebildet ist.

10. Computerprogrammprodukt, welches Befehle umfasst, die ausgeführt auf einem Steuergerät (8) nach einem der Ansprüche 6 bis 8 das Verfahren (200) nach einem der Ansprüche 1 bis 5 ausführen.

## Claims

1. A method (200) for determining a clearance (L) of an electromechanical brake (100), in particular of a commercial vehicle, comprising the steps:
- activating (202) a clearance determination cycle for the brake (100),
- moving (204) an electromechanical brake actuator (2) by means of a drive motor (A) to a first end position (E1), in which the brake (100) is in a non-applied state,
- moving (206) the electromechanical brake actuator (2) by means of the drive motor (A) toward a second end position (E2), wherein the movement of the brake actuator (2) applies at least one brake pad (103) of the brake (100) toward a brake disk, wherein the method is **characterized by** the following steps:
- continuously determining (208) a rotor position (ϕ) and/or a motor current (i) of the drive motor (A) during the movement of the brake actuator (2) toward the second end position (E2),
- determining (210) a contact position (K), in which the brake pad (103) comes into contact with the brake disk, on the basis of the rotor position (ϕ) and/or of the motor current (i),
- determining (212) a clearance (L) and/or a degree of brake pad wear (V_{B}) on the basis of the determined contact position (K).

2. The method (200) according to claim 1,
wherein the determination (300) of the contact position (K) on the basis of the rotor position (ϕ) comprises the steps:
- defining (302) a maximum current (iₘₐₓ) for the drive motor (A),
- operating (304) the drive motor (A) with a motor current (i) which is less than or equal to the maximum current (imax),
- determining (306) a rotor end position (ϕₘₐₓ) of the drive motor (A), for which no further change of the rotor position (ϕ) of the drive motor (A) of the brake actuator (2) occurs for the given maximum current (imax),
- determining the contact position (K) from the rotor end position (ϕₘₐₓ), in particular on the basis of first correlation parameters (K1).

3. The method (200) according to claim 2, wherein the first correlation parameters (K1) have at least one of the following parameters:
- current intensity,
- last determined degree of brake pad wear,
- transmission ratio of a transmission of the brake actuator.

4. The method (200) according to any of the foregoing claims, wherein the determination (400) of the contact position (K) on the basis of the motor current (i) comprises the steps:
- detecting (402) a change of the motor current (i), in particular an increase of the motor current (iₜₕᵣ) for the first time,
- determining (404) the corresponding rotor position (ϕₜₕᵣ) at which the increase of the motor current (iₜₕᵣ) occurs for the first time,
- determining (406) the contact position (K) from the rotor position (ϕₜₕᵣ), in particular on the basis of second correlation parameters (K2).

5. The method (200) according to any of the foregoing claims, further comprising the step:
- storing at least one of the following in a memory (12), in particular in a memory (12) of a control device (8):
determined contact position (K),
clearance (L),
degree of brake pad wear (V_{B}).

6. A control device (8) for determining a clearance (L) of an electromechanical brake (100), in particular of a commercial vehicle brake, having
- an interface (10) for the connection (6) in a signal conducting manner of the control device (8) to a brake actuator (2) ;
- a memory (12) and a processor (14), wherein the control device (8) is equipped to:
- activate a clearance determination cycle (202) for the brake (100),
- move an electromechanical brake actuator (2) by means of a drive motor (A) to a first end position (E1), in which the brake (100) is in a non-applied state,
- moving the electromechanical brake actuator (2) by means of the drive motor (A) toward a second end position (E2), wherein the movement of the brake actuator (2) applies at least one brake pad (103) of the brake (100) toward a brake disk, **characterized in that** the control device is further equipped to
- continuously determine a rotor position (ϕ) and/or a motor current (i) of the drive motor (A) during the movement of the brake actuator (2) toward the second end position (E2),
- determine a contact position (K), in which the brake pad (103) comes into contact with the brake disk, on the basis of the rotor position (ϕ) and/or of the motor current (i), and
- determine a clearance (L) and preferably a degree of brake pad wear (V_{B}) on the basis of the determined contact position (K).

7. The control device (8) according to claim 6, wherein the control device (8) for determining (300) the contact position (K) on the basis of the rotor position (ϕ) is equipped to,
- define (302) a maximum current (iₘₐₓ) for the drive motor (A),
- operate (304) the drive motor (A) with a motor current (i) which is less than or equal to the maximum current (imax),
- determine (306) a rotor end position (ϕₘₐₓ) of the drive motor (A), for which no further change of the rotor position (ϕ) of the drive motor (A) of the brake actuator (2) occurs for the given maximum current (imax),
- determine a contact position (K) from the rotor end position (ϕₘₐₓ), in particular on the basis of first correlation parameters (K1).

8. The control device (8) according to claim 6, wherein the control device (8) for determining (400) the contact position (K) on the basis of the motor current (i) is equipped to,
- detect (402) a change of the motor current (i), in particular an increase of the motor current (iₜₕᵣ) for the first time,
- determine (404) a corresponding rotor position (ϕₜₕᵣ) in which the current increase of the motor current (iₜₕᵣ) occurs for the first time,
- determine (406) a contact position (K) from the rotor position (ϕₜₕᵣ), in particular on the basis of second correlation parameters (K2).

9. An electromechanical brake (100), in particular for commercial vehicles, having
a brake disk,
at least one brake pad (103) accommodated in a brake caliper (107),
an electromechanical brake actuator (2) having an electrical drive motor (A) for applying the at least one brake pad (103) toward the brake disk,
and a control device (8),
**characterized in that** the control device (8) is configured according to any of claims 6 to 8.

10. A computer program product, which comprises commands executed on a control device (8) according to any of claims 6 to 8 which execute the method (200) according to any of claims 1 to 5.

## Revendications

1. Procédé (200) pour établir un jeu (L) d'un frein (100) électromécanique, en particulier d'un frein de véhicule utilitaire, qui comprend les étapes :
- activation (202) d'un cycle d'établissement de jeu pour le frein (100),
- déplacement (204) d'un actionneur de frein (2) électromécanique au moyen d'un moteur d'entraînement (A) dans une première position finale (E1) où le frein (100) se trouve dans un état non serré,
- déplacement (206) de l'actionneur de frein (2) électromécanique au moyen du moteur d'entraînement (A) dans la direction d'une seconde position finale (E2), dans lequel le déplacement de l'actionneur de frein (2) serre au moins une garniture de frein (103) du frein (100) dans la direction d'un disque de frein, dans lequel le procédé est **caractérisé par** les étapes suivantes :
- établissement (208) en continu d'une position de rotor (ϕ) et/ou alors d'un courant de moteur (i) du moteur d'entraînement (A) pendant le déplacement de l'actionneur de frein (2) dans la direction de la seconde position finale (E2),
- établissement (210) d'une position de contact (K) où la garniture de frein (103) entre en contact avec le disque de frein, sur la base de la position de rotor (ϕ) et/ou du courant de moteur (i),
- détermination (212) d'un jeu (L) et/ou d'un degré d'usure de garniture de frein (V_{B}) sur la base de la position de contact (K) établie.

2. Procédé (200) selon la revendication 1,
dans lequel l'établissement (300) de la position de contact (K) sur la base de la position de rotor (ϕ) comprend les étapes :
- définition (302) d'un courant maximal (iₘₐₓ) pour le moteur d'entraînement (A),
- exploitation (304) du moteur d'entraînement (A) avec un courant de moteur (i), lequel est inférieur ou égal au courant maximal (iₘₐₓ),
- établissement (306) d'une position finale de rotor (ϕₘₐₓ) du moteur d'entraînement (A), pour laquelle aucune autre modification de la position de rotor (ϕ) du moteur d'entraînement (A) de l'actionneur de frein (2) n'advient pour le courant maximal (iₘₐₓ) donné,
- établissement de la position de contact (K) à partir de la position finale de rotor (ϕₘₐₓ), en particulier sur la base de premiers paramètres de corrélation (K1).

3. Procédé (200) selon la revendication 2,
dans lequel les premiers paramètres de corrélation (K1) présentent au moins l'un des paramètres suivants :
- intensité de courant,
- degré d'usure de garniture de frein établi en dernier,
- démultiplication d'une boîte de vitesse de l'actionneur de frein.

4. Procédé (200) selon l'une des revendications précédentes,
dans lequel l'établissement (400) de la position de contact (K) sur la base du courant de moteur (i) comprend les étapes :
- détection (402) d'une modification du courant de moteur (i), en particulier d'une augmentation pour la première fois du courant de moteur (iₜₕᵣ),
- établissement (404) de la position de rotor (ϕₜₕᵣ) correspondante où l'augmentation de courant du courant de moteur (iₜₕᵣ) advient pour la première fois,
- établissement (406) de la position de contact (K) à partir de la position de rotor (ϕₜₕᵣ), en particulier sur la base de seconds paramètres de corrélation (K2).

5. Procédé (200) selon l'une des revendications précédentes, qui comprend en outre l'étape :
- déposer au moins l'un des éléments suivants dans une mémoire (12), en particulier dans une mémoire (12) d'un calculateur (8) :
position de contact (K) établie,
jeu (L),
degré d'usure de garniture de frein (V_{B}).

6. Calculateur (8) pour établir un jeu (L) d'un frein (100) électromécanique, en particulier d'un frein de véhicule utilitaire, avec
- une interface (10) pour une liaison (6) par conduction de signal du calculateur (8) avec un actionneur de frein (2) ;
- une mémoire (12) et un processeur (14),
dans lequel le calculateur (8) est aménagé pour :
- activer un cycle d'établissement de jeu (202) pour le frein (100),
- déplacer un actionneur de frein (2) électromécanique au moyen d'un moteur d'entraînement (A) dans une première position finale (E1) où le frein (100) se trouve dans un état non serré,
- déplacer l'actionneur de frein (2) électromécanique au moyen du moteur d'entraînement (A) dans la direction d'une seconde position finale (E2), dans lequel le déplacement de l'actionneur de frein (2) serre au moins une garniture de frein (103) du frein (100) dans la direction d'un disque de frein, **caractérisé en ce que** le calculateur est en outre aménagé pour
- établir en continu une position de rotor (ϕ) et/ou un courant de moteur (i) du moteur d'entraînement (A) pendant le déplacement de l'actionneur de frein (2) dans la direction de la seconde position finale (E2),
- établir une position de contact (K) où la garniture de frein (103) entre en contact avec le disque de frein, sur la base de la position de rotor (ϕ) et/ou du courant de moteur (i), et
- déterminer un jeu (L) ainsi que de préférence un degré d'usure de garniture de frein (V_{B}) sur la base de la position de contact (K) établie.

7. Calculateur (8) selon la revendication 6,
dans lequel le calculateur (8) pour établir (300) la position de contact (K) sur la base de la position de rotor (ϕ) est aménagé pour
- définir (302) un courant maximal (iₘₐₓ) pour le moteur d'entraînement (A),
- exploiter (304) le moteur d'entraînement (A) avec un courant de moteur (i), lequel est inférieur ou égal au courant maximal (iₘₐₓ),
- établir (306) une position finale de rotor (ϕₘₐₓ) du moteur d'entraînement (A), pour laquelle aucune autre modification de la position de rotor (ϕ) de l'actionneur de frein (2) n'advient pour le courant maximal (iₘₐₓ) donné,
- établir une position de contact (K) à partir de la position finale de rotor (ϕₘₐₓ), en particulier sur la base de premiers paramètres de corrélation (K1).

8. Calculateur (8) selon la revendication 6,
dans lequel le calculateur (8) pour établir (400) la position de contact (K) sur la base du courant de moteur (i) est aménagé pour
- détecter (402) une modification du courant de moteur (i), en particulier une augmentation pour la première fois du courant de moteur (iₜₕᵣ),
- établir (404) une position de rotor (ϕₜₕᵣ) correspondante où l'augmentation de courant du courant de moteur (iₜₕᵣ) advient pour la première fois,
- établir (406) une position de contact (K) à partir de la position de rotor (ϕₜₕᵣ), en particulier sur la base de seconds paramètres de corrélation (K2).

9. Frein (100) électromécanique, en particulier pour des véhicules utilitaires, avec
un disque de frein,
au moins une garniture de frein (103) reçue dans un étrier de frein (107),
un actionneur de frein (2) électromécanique avec un moteur d'entraînement (A) pour serrer la au moins une garniture de frein (103) dans la direction du disque de frein,
et un calculateur (8),
**caractérisé en ce que** le calculateur (8) est conçu selon l'une des revendications 6 à 8.

10. Produit de programme informatique, lequel comprend des instructions qui lorsqu'elles sont exécutées sur un calculateur (8) selon l'une des revendications 6 à 8 exécutent le procédé (200) selon l'une des revendications 1 à 5.
